# EUROPEAN PATENT APPLICATION

(11) **EP 4 597 322 A2**
(43) Date of publication of application: **06.08.2025**
(21) Application number: 25155006.7
(22) Date of filing: 30.01.2025
(51) Int. Cl.: G06F 11/10

(54) **ERROR DETECTION FOR ACTIVATED PAGES IN A MEMORY DEVICE**

(30) Priority: 01.02.2024 US 202463548589 P; 24.07.2024 US 202418783321
(71) Applicant: Micron Technology, Inc, Boise ID 83707 (US)
(72) Inventor: Kerstetter, Bryan David, BOISE (US); Porter, John David, BOISE (US)
(74) Representative: Pio, Federico

(57) **Abstract**

Systems, methods, and apparatus to detect errors in data being accessed in a memory array. In one approach, a memory device includes error detection circuitry, error correction circuitry, and a controller. The controller accesses portions of the memory array. The error detection circuitry determines whether an error exists in the accessed portions. Errors are detected by comparing parity stored in each portion with the computed parity for all data stored in that portion when being accessed. If an error is detected for a portion, an address of that portion is stored in a scrub queue for later correction using the error correction circuitry.

## Description

### RELATED APPLICATIONS

The present application claims priority to Prov. U.S. Pat. App. Ser. No. 63/548,589 filed Feb. 1, 2024, the entire disclosure of which application is hereby incorporated herein by reference.

### FIELD OF THE TECHNOLOGY

At least some embodiments disclosed herein relate to memory devices in general, and more particularly, but not limited to error detection when accessing data stored in memory.

### BACKGROUND

Memory devices can include semiconductor circuits that provide electronic storage of data for a host system (e.g., a server or other computing device). Memory devices may be volatile or non-volatile. Volatile memory requires power to maintain data, and includes devices such as random-access memory (RAM), static random-access memory (SRAM), dynamic random-access memory (DRAM), or synchronous dynamic random-access memory (SDRAM), among others. Non-volatile memory can retain stored data when not powered, and includes devices such as flash memory, read-only memory (ROM), electrically erasable programmable ROM (EEPROM), erasable programmable ROM (EPROM), resistance variable memory, such as phase change random access memory (PCRAM), resistive random-access memory (RRAM), or magnetoresistive random access memory (MRAM), among others.

Host systems (e.g., a host device) can include a host processor, a first amount of host memory (e.g., main memory, often volatile memory, such as DRAM) to support the host processor, and one or more storage systems (e.g., non-volatile memory, such as flash memory) that provide additional storage to retain data in addition to or separate from the main memory.

A storage system, such as a solid-state drive (SSD), can include a memory controller and one or more memory devices, including a number of (e.g., multiple) dies or logical units (LUNs). In certain examples, each die can include a number of memory arrays and peripheral circuitry thereon, such as die logic or a die processor. The memory controller can include interface circuitry configured to communicate with a host device (e.g., the host processor or interface circuitry) through a communication interface (e.g., a bidirectional parallel or serial communication interface). The memory controller can, for example, receive commands or operations from the host system in association with memory operations or instructions, such as read or write operations to transfer data (e.g., user data and associated integrity data, such as error data or address data, etc.) between the memory devices and the host device, erase operations to erase data from the memory devices, perform drive management operations (e.g., data migration, garbage collection, block retirement), etc.

Many memory devices, particularly non-volatile memory devices, such as NAND flash devices, etc., frequently relocate data or otherwise manage data in the memory devices (e.g., garbage collection, wear leveling, drive management, etc.). NAND flash is a type of flash memory constructed using NAND logic gates. Alternatively, NOR flash is a type of flash memory constructed using NOR logic gates.

Volatile memory devices such as DRAM typically refresh stored data. For example, refresh is activating and then precharging a row. At activation time the data in the cells are sensed (implicitly read), and at precharge time the data is written back to the cells (implicitly written).

Storage devices can have controllers that receive data access requests from host computers and perform programmed computing tasks to implement the requests in ways that may be specific to the media and structure configured in the storage devices. In one example, a flash memory controller manages data stored in flash memory and communicates with a computing device. In some cases, flash memory controllers are used in solid-state drives for use in mobile devices, or in SD cards or similar media for use in digital cameras.

Firmware can be used to operate a flash memory controller for a particular storage device. In one example, when a computer system or device reads data from or writes data to a flash memory device, it communicates with the flash memory controller.

### BRIEF DESCRIPTION OF THE DRAWINGS

The embodiments are illustrated by way of example and not limitation in the figures of the accompanying drawings in which like references indicate similar elements.
**FIG. 1** shows various mathematical relationships associated with hammer detection and mitigation.
**FIG. 2** shows an exemplary graph of hammer detection and mitigation probability versus hammer threshold.
**FIG. 3** shows a memory device having error detection circuitry to detect errors in accessed portions of a memory array, in accordance with some embodiments.
**FIG. 4** shows circuitry to detect an error in a page being accessed in a memory array, in accordance with some embodiments.
**FIG. 5** shows sense amplifier latches to hold data associated with memory cells of a memory array, in accordance with some embodiments.
**FIG. 6** shows a flow diagram for error detection and recording of addresses associated with detected errors for future scrubbing, in accordance with some embodiments.
**FIG. 7** shows an example of comparing computed parity to stored parity to determine whether an error is detected.
**FIG. 8** shows an exemplary approach for computing parity.
**FIG. 9** shows a method for detecting errors in accessed pages and recording the errors for later correction, in accordance with some embodiments.

### DETAILED DESCRIPTION

The following disclosure describes various embodiments for performing error detection when accessing data stored in memory. Errors detected in the data are recorded for future correction (e.g., during memory management). In one example, the accessed data is a page, and detected errors are stored in a queue for scrubbing. At least some embodiments herein relate to a non-volatile memory device that includes a scrub queue for storing physical addresses of pages having a detected error. The memory device may, for example, store data used by a host device (e.g., a computing device of an autonomous vehicle, or another computing device that accesses data stored in the memory device). In one example, the memory device is a solid-state drive mounted in an electric vehicle.

Memory devices can suffer from soft errors that are induced by activity during operation of the memory device. For example, DRAM and certain emerging memory devices (e.g., ferroelectric RAM devices) can exhibit row hammer, in which repeated activation of a row causes one or more soft errors to occur. This can cause a failure to read proper data values from the row when being accessed during a read operation. The errors occur when the number of activations exceed a hammer threshold.

In some cases, for mitigation of errors a memory device may perform an operation such as an ECC scrub after a page has incurred numerous activates equal to the hammer threshold. In prior approaches, the physical page address associated with activates may be randomly sampled in effort to capture (i.e., detect) the hammered page address.

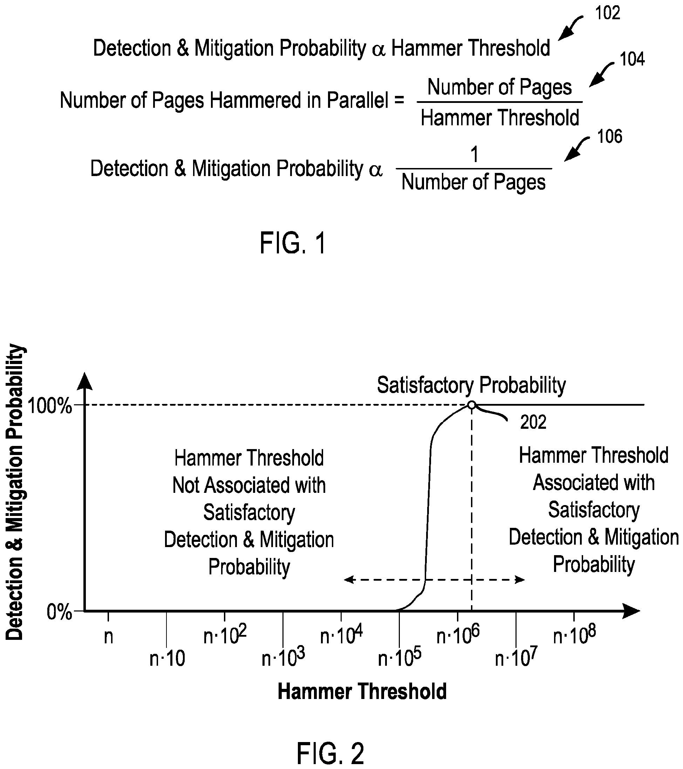

**FIG. 1** shows various mathematical relationships associated with hammer detection and mitigation. As seen in relationships 102 and 106, the detection and mitigation probability is proportional to the hammer threshold, and is inversely proportional to the number of pages. As seen in equation 104, the number of pages hammered in parallel is equal to the number of pages divided by the hammer threshold.

**FIG. 2** shows an exemplary graph of hammer detection and mitigation probability versus hammer threshold. For a satisfactory probability 202, hammered page addresses are scrubbed so that errors from row hammer are corrected. In order to meet reliability requirements, a satisfactory probability is met to ensure that it is highly likely that all hammered rows are detected and appropriate mitigation operations take place (e.g., to avoid a failure in reading data). This results in a hammer threshold associated with a satisfactory detection and mitigation probability 202. A hammer threshold less than this value will not result in a satisfactory detection and mitigation probability. A result may be a failure of proper memory device operation.

It has been observed that emerging memory technologies (e.g., emerging non-volatile memory devices) sometimes require greater activation power than DRAM. To reduce power associated with activation, the page size may be decreased. However, decreased page size results in greater row address terms and less column terms, which results in an increased number of addressable pages. The number of addressable pages determines the number of pages that can be hammered in parallel to reach the hammer threshold. This is illustrated by equation 104 of **FIG. 1****.**

Emerging memory technologies may suffer from a particularly low detection and mitigation probability due to both a decreased hammer threshold and an increased number of pages. To solve the above technical problems, there is a need to increase the probability of detecting hammered pages despite an increased number of pages and a low hammer threshold.

Various embodiments of the present disclosure provide a technological solution to one or more of the above technical problems. In one embodiment, a memory device includes error detection circuitry (e.g., even/odd parity check circuitry) and error correction circuitry (e.g., ECC engine). A controller of the memory device accesses portions of a memory array(s) in response to commands from a host device. The controller detects, using the error detection circuitry, whether an error exists in data stored in each accessed portion (e.g., an entire page of data on an activated row of a memory array). The error is detected by comparing a parity stored in the accessed portion with a parity computed at the time of access.

In response to detecting an error for any accessed portion, a location of the accessed portion is stored in a scrub queue for future correction. The error correction circuitry corrects the detected errors for the locations (e.g., physical addresses of pages) in the scrub queue by using the error correction circuitry. The errors are corrected at a later time after detection (e.g., during memory management operation(s)).

In one embodiment, a memory device implements an on-die ECC scheme to detect and correct errors on a given code word. Multiple code words may reside on a page. The latency of a code word ECC engine is typically too large to practically run each code word through the ECC to determine if there are errors on the entire page.

As a page is hammered, activity induced soft errors are expected to manifest. The memory device implements a lightweight error detection scheme to detect if a page has an error when activated.

As used herein, "lightweight" indicates that functionality of the error detection scheme is less than that of the ECC engine. The lightweight functionality is used to reduce the time required to perform error detection for all data stored in a page when accessed.

In one example, the lightweight error detection scheme consists of an even/odd parity scheme to detect single bit error. Even/odd parity is stored for each page, which requires one bit be stored per page.

The lightweight error detection latency is less than the code word ECC engine latency. The number of bits that can be corrected by the code word ECC engine is greater than or equal to the number of bit errors that can be detected by the lightweight error detection scheme.

If an error is detected by the lightweight error detection scheme during activation, the physical page address associated with the activate is recorded (e.g., stored in a scrub queue) for a future activity-based ECC scrub. During an ECC scrub of a page, each code word that resides on a page is passed through the ECC engine. Any correctable errors are corrected after the ECC scrub and written back to the same page.

In one embodiment, activity-based memory management operation by the controller will trigger either a wear leveling operation or a scrub operation. In one example, 95% of memory management (MM) operations are used for wear leveling, and 5% of memory management operations are used for scrubbing addresses in a scrub queue.

In one embodiment, a memory device uses a counter to count memory management commands. The counter tracks the number of issued activity-based memory management (MM) commands. In one example, a scrub is performed when the counter reaches a threshold, then the counter is reset. In one embodiment, the threshold at which a scrub is performed may be randomized. This can help improve security of the memory device. In one embodiment, other mitigation operation(s) additionally and/or alternatively to a scrub may be performed.

In one example, a scrub steal ratio is based on a number of wear leveling operations divided by a number of scrub operations. The scrub steal ratio determines how often a memory management command is stolen to perform a scrub. A command is stolen by the controller by performing a scrub instead of the operation initially indicated to the controller by the memory management command.

A scrub queue stores physical page addresses that have been flagged by the lightweight error detection scheme to contain an error. At powerup of the memory device, the counter and the scrub queue are reset.

In one embodiment, a controller receives various commands during operation. The commands include, for example, activate and precharge commands.

When an activate is issued, the controller senses a page, which causes data in the page to reside in sense amplifier latches. The controller then computes an error detection parity. If the stored parity in the page disagrees with the computed parity, the physical page address is added to the scrub queue.

When a precharge command is issued, the controller computes an error detection parity. The page data including the computed parity is written into memory cells of a memory array.

When an activity-based memory management command (e.g., a wear leveling command or a refresh command) is issued, the controller determines if the counter has reached a value corresponding to the scrub steal ratio. If the memory management (MM) count of the counter is equal to the scrub steal ratio, a physical page address from the scrub queue is scrubbed. In one example of this scrub, each code word of the page is passed through the code word ECC engine and corrected data is written back to the physical page address. Then, the MM count is reset to zero.

If the memory management (MM) count is not equal to the scrub steal ratio, the controller performs a wear leveling operation and increments the MM count.

In one embodiment, a memory device implements a page error detection scheme to detect if a page has an error when activated, which will cause the address associated with the activation to be recorded in a queue for a future scrub by a code word ECC engine. The page consists of a multiplicity of code words and parity that represents the entire page. The queue can be of any depth. The page error detection scheme computes parity associated with a set of code words or for the entire page where an error may be identified if computed parity does not equal stored parity.

In one embodiment, the code word ECC engine is used to detect and correct errors on a given code word. The code word consists of data and parity to be processed by the code word ECC engine. A scrub by the code word ECC engine is triggered by an activity-based memory management operation.

In one embodiment, a page error detection method identifies if there is an error on a page when an activate command is issued. The page error detection method computes parity that represents an entire page and writes such parity into the memory array when a precharge command is issued.

Various advantages can be provided by at least some embodiments described herein. For example, there can be increased probability of detecting a hammered page despite a higher number of pages and a lower hammer threshold. For example, there can be greater protection against targeted row hammer attacks. Mitigation of errors occurs as the errors manifest. For example, hammer detection is not dependent upon read patterns, device security can be increased, and the reliability and lifetime of memory devices can be increased.

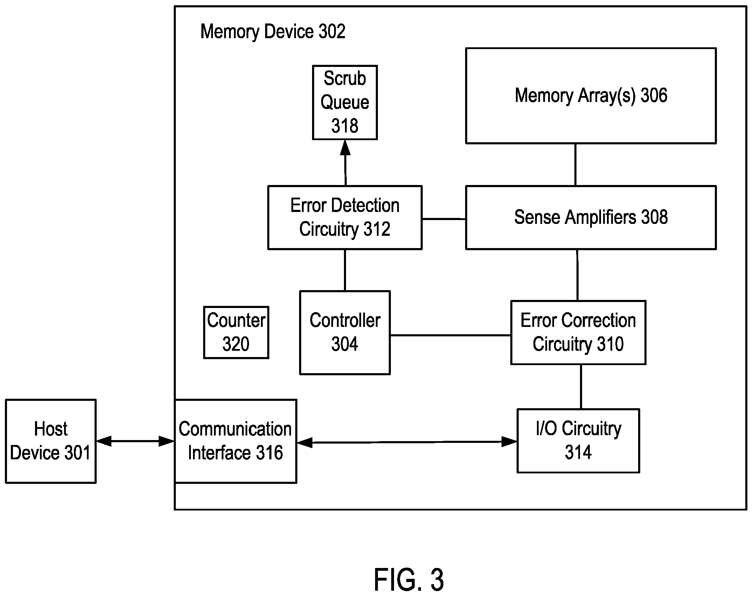

**FIG.** 3 shows a memory device 302 having error detection circuitry 312 to detect errors in accessed portions of one or more memory arrays 306, in accordance with some embodiments. Controller 304 accesses portions of memory array(s) 306 in response to commands received from host device 301 via communication interface 316. The controller 304 detects, using the error detection circuitry 312, whether an error exists in data stored in each accessed portion (e.g., an entire page of data on an activated row of memory array 306).

In response to detecting an error for any accessed portion, a location of the accessed portion is stored in a scrub queue 318 for future correction. Error correction circuitry 310 (e.g., code word ECC engine such as described above) corrects the detected errors for the locations (e.g., physical addresses of pages) in the scrub queue 318 by using the error correction circuitry 310. The errors are corrected at a later time after detection (e.g., during memory management operation(s) when the MM count reaches a scrub threshold).

In one embodiment, counter 320 is used by controller 304 to count memory management commands (e.g., wear leveling commands). When the counter reaches a defined threshold, one or more addresses in the scrub queue 318 are scrubbed.

Sense amplifiers 308 sense data stored in memory cells of memory arrays 306. Controller 304 accesses the stored data by activating one or more rows of memory arrays 306. In one example, the activated rows correspond to a page of stored data. When the one or more rows are activated, error detection circuitry 312 determines whether an error is detected in the stored data. In one example, error detection circuitry 312 determines whether there is an error in any data stored in the entire page accessed.

In one embodiment, error detection circuitry 312 computes a parity for the data accessed by the activated row. A previously-determined parity is stored with the page of data. Error detection circuitry 312 compares the computed parity to the stored parity. If they are not equal, then an error is detected. In response to detecting an error, controller 304 or error detection circuitry 312 adds a physical address for the page to scrub queue 318.

Scrub queue 318 is used to record addresses for pages in which an error has been detected. The addresses are scrubbed in a future operation. When the addresses are scrubbed, error correction circuitry 310 is used to correct the errors.

When a row of memory array 306 is activated, data can be read from the row as part of a read or other operation (e.g., wear leveling). Error correction circuitry 310 is used to detect and correct any errors identified in the accessed data on the row. Corrected read data is provided for output on communication interface 316 by I/O circuitry 314.

In one embodiment, communication interface (I/F) 316 is a bidirectional parallel or serial communication interface. The host device 301 can include a host processor (e.g., a host central processing unit (CPU) or other processor or processing circuitry, such as a memory management unit (MMU), interface circuitry, etc.).

In one embodiment, memory arrays 306 can be configured in a number of non-volatile memory devices (e.g., dies or LUNs), such as one or more stacked flash memory devices each including non-volatile memory (NVM) having one or more groups of non-volatile memory cells and a local device controller or other periphery circuitry thereon (e.g., device logic, etc.), and controlled by controller 304 over an internal storage-system communication interface (e.g., an Open NAND Flash Interface (ONFI) bus, etc.) separate from the communication interface 316.

In one embodiment, each memory cell in a NOR, NAND, 3D Cross Point, MRAM, or one or more other architecture semiconductor memory array 306 can be programmed individually or collectively to one or a number of programmed states. A single-level cell (SLC) can represent one bit of data per cell in one of two programmed states (e.g., 1 or 0). A multi-level cell (MLC) can represent two or more bits of data per cell in a number of programmed states (e.g., 2ⁿ, where n is the number of bits of data). In certain examples, MLC can refer to a memory cell that can store two bits of data in one of 4 programmed states. A triple-level cell (TLC) can represent three bits of data per cell in one of 8 programmed states. A quad-level cell (QLC) can represent four bits of data per cell in one of 16 programmed states. In other examples, MLC can refer to any memory cell that can store more than one bit of data per cell, including TLC and QLC, etc.

The controller 304 can receive instructions from the host device 301, and can transfer data to (e.g., write or erase) or from (e.g., read) one or more of the memory cells of the memory arrays 306. The controller 304 can include, among other things, circuitry or firmware, such as a number of components or integrated circuits. For example, the controller 304 can include one or more memory control units, circuits, or components configured to control access across the memory array and to provide a translation layer between the host device 301 and a storage system, such as a memory manager, one or more memory management tables, etc.

In one embodiment, controller 304 can include circuitry or firmware, such as a number of components or integrated circuits associated with various memory management functions, including, among other functions, wear leveling (e.g., garbage collection or reclamation), error detection or correction, bank or block retirement, or one or more other memory management functions.

In one embodiment, controller 304 can include a set of management tables configured to maintain various information associated with one or more components of memory device 302 (e.g., various information associated with a memory array or one or more memory cells coupled to controller 304). For example, the management tables can include information regarding bank or block age, block erase count, error history, or one or more error counts (e.g., a write operation error count, a read bit error count, a read operation error count, an erase error count, etc.) for one or more banks or blocks of memory cells coupled to the controller 304. In certain examples, if the number of detected errors for one or more of the error counts is above a threshold, the bit error can be referred to as an uncorrectable bit error. The management tables can maintain a count of correctable or uncorrectable bit errors, among other things.

In one embodiment, memory device 302 can include one or more 3D NAND architecture semiconductor memory arrays 306. The memory arrays 306 can include a number of memory cells arranged in, for example, banks, a number of devices, planes, blocks, physical pages, super blocks, or super pages. As one example, a TLC memory device can include 18,592 bytes (B) of data per page, 1536 pages per block, 548 blocks per plane, and 4 planes per device.

In one embodiment, data can be written to or read from the memory device 302 in pages and erased in blocks. However, one or more memory operations (e.g., read, write, erase, etc.) can be performed on larger or smaller groups of memory cells, as desired. For example, a partial update of tagged data from an offload unit can be collected during data migration or garbage collection to ensure it was re-written efficiently.

In one example, a page of data includes a number of bytes of user data (e.g., a data payload) and its corresponding metadata. As an example, a page of data may include 4 kB of user data as well as a number of bytes (e.g., 32B, 54B, 224B, etc.) of auxiliary or metadata corresponding to the user data, such as integrity data (e.g., error detecting or correcting code data), address data (e.g., logical address data, etc.), or other metadata associated with the user data. Different types of memory cells or memory arrays can provide for different page sizes, or may require different amounts of metadata associated therewith.

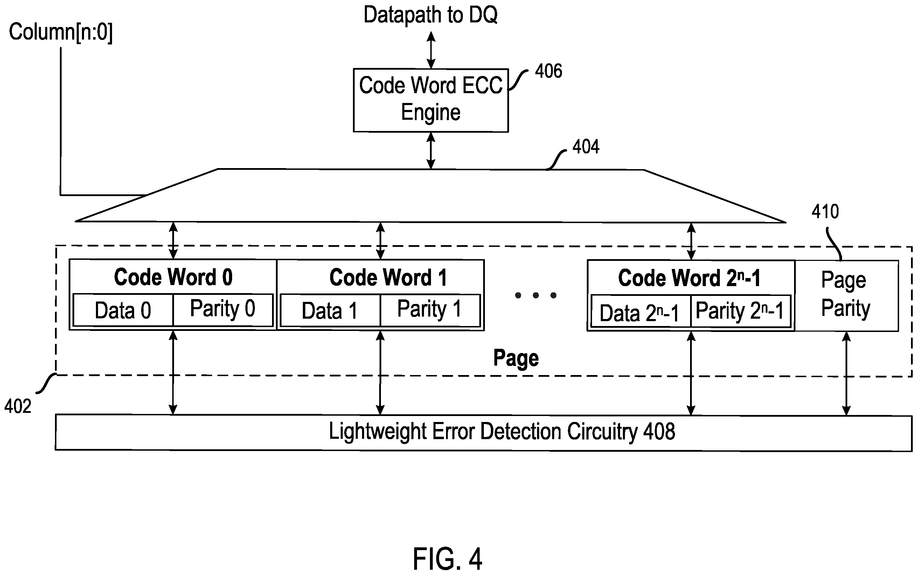

**FIG. 4** shows circuitry to detect an error in a page being accessed in a memory array, in accordance with some embodiments. In one example, the page is accessed by activating a row in memory array 306. The error in the accessed page is detected using error detection circuitry 408. In one embodiment, error detection circuitry 408 uses one or more parity bits to check for errors in the page when being accessed. Other error detection schemes can be used in other embodiments.

In one example, page 402 contains multiple code words 0, 1, ... 2ⁿ-1. Page 402 also contains a page parity 410 that is stored with the page 402. Parity 410 is computed at precharge time for page 402. At precharge time, parity 410 can be computed by error detection circuitry 408 or by other logic circuitry.

In one embodiment, parity 410 is computed using all data stored in the code words of page 402. This includes both user data and parity data stored for each code word. In one example, all such data can be combined using exclusive or (XOR) logic operations to calculate parity 410. Other parity schemes can be used in alternative embodiments.

In one embodiment, page parity 410 can be stored outside of page 402. For example, parity 410 can be stored in memory of memory device 302 that is outside of memory array 306. This can be done for parity of all pages, or only a portion of pages.

Each page 402 in the memory array has multiple columns [n:0]. Data being read from or written to page 402 is addressed by a row address and a column address. The row address corresponds to a word line that is activated to access data stored in page 402. The column address is used by column decoder 404 to select a column for memory cells containing the data to be accessed.

During a read operation, data read from page 402 is processed by code word ECC engine 406 to detect and correct errors. Corrected data is, for example, communicated to a host device via a data path to input/output pins (e.g., DQ pins).

In one embodiment, each code word of page 402 includes user data (e.g., Data 0) and a parity (e.g., Parity 0) previously calculated for that data. In one example, the parity is an error correction code providing a capability to correct one or more bits of the code word. The parity stored for each code word can be computed by ECC engine 406 when the code word is stored. ECC engine 406 can use the parity stored for each code word to detect and correct one or more bit errors of the code word when the code word is being read.

In one embodiment, a lightweight error detection scheme is used to assist in selecting pages (e.g., page 402) to scrub. Relative to the code word ECC engine 406, this error detection scheme has reduced error detection capability and no error correction capabilities. For example, a simple even/odd parity scheme can be implemented which only requires storing one additional bit per page. This error detection scheme can detect any number of odd errors, but is unable of detecting an even number of errors. As a page is hammered, activity induced soft errors would manifest. Thus, this scheme detects a single bit error that appears on a page.

In one embodiment, this scheme assumes that it is more likely that a single bit error would occur than a double bit error. Or in other words, a single bit error would occur before a double bit error would occur. However, in cases where it is likely that an activity-induced double bit error could occur from one activate cycle to another, then the lightweight error detection scheme is paired with a random selection scrubbing scheme. Regardless, with the lightweight error detection scheme, single-bit errors that exist on the page are identified in much less time than running all code words through the ECC engine 406.

In one example, when an activate command is issued, page 402 is sensed, and the page's data is stored in sense amplifier latches. After the activation operation is complete, all the page data excluding the new parity bit 410 (e.g., the data associated with all code words) are input to an XOR tree that computes even/odd parity. If the computed parity is the same as the stored parity 410, then no error is detected. To the contrary, if the computed parity is opposite to the stored parity 410, an error is identified and the physical page address associated with the activate is recorded in a queue (e.g., scrub queue 318). The time required for this entire page error detection can, for example, be considered and handled appropriately in the row address strobe to column address strobe (tRCD) timing budget.

After a precharge command is issued, the even/odd parity for the data that resides in the sense amplifier latches is computed and the appropriate parity bit polarity is written to the array along with the data (e.g., all code words of the page). A subsequent activate operation may then cause a bit flip to occur which would then be detected by the lightweight ECC engine.

Later, a memory management operation is allocated to scrub the page whose physical address was previously recorded in the queue. The scrub requires the use of standard code word ECC engine 406 where each code word is scrubbed one at a time (e.g., a read modify write operation occurs such that the corrected data is written back into the array one code word at a time). Hence, the lightweight error detection scheme can be used to quickly identify page errors, and the code word ECC engine is used to scrub page errors that were identified. Data transfer from the DQ (input/output) pins of the memory device involves use of the code word ECC engine 406 and does not involve the lightweight error detection scheme.

One advantage of this exemplary lightweight error detection scheme is that aggressor detection is not dependent upon activate or read patterns. In some cases, there is a danger that not all identified aggressors are able to be scrubbed if the queue depth is too small. Therefore, the queue depth can be determined based upon process capability.

In various embodiments, when using lightweight error detection (e.g., by circuitry 408), the data state of the memory array is considered (e.g., the initial state of the page data and page parity 410). Without proper initialization of the data state throughout the memory array, there could be random page data and random page parity. Random page data and random page parity could result in many false errors. For example, without proper initialization, the scrub queue can be inundated with false errors jeopardizing the ability to accurately scrub rows with soft errors.

In one embodiment, for a non-volatile memory device, the initial page data and parity is initialized in the factory at manufacture to avoid the possibility of flagging false errors at first use. In one embodiment, for a volatile memory device (or if a non-volatile memory device emulates a volatile memory device), the initial page data and parity is initialized at every power up cycle.

In one example, an initialized state for the simple even/odd parity state is an all zeros state. That is, all pages in the memory device are initialized to an all zeros state for all page data bits and all page parity bits in the memory device.

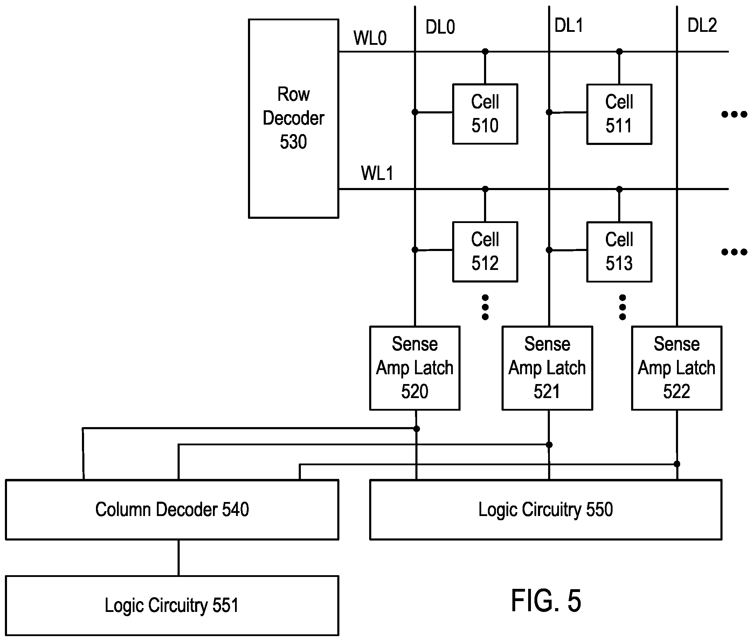

**FIG. 5** shows sense amplifier latches 520, 521, 522 to hold data associated with memory cells 510, 511, 512, 513 of a memory array, in accordance with some embodiments. In one example, the memory cells are located in memory array 306. The memory cells can be of various memory types including volatile and/or non-volatile memory cells.

The memory cells are accessed using word lines (e.g., WL0) and digit lines (e.g., DL0) or bit lines. An individual memory cell is accessed by activating a word line selected by row decoder 530 and selecting a digit line or bit line selected by column decoder 540. When a word line is activated, data from each memory cell on a row resides in the corresponding sense amplifier latch for each digit line or bit line.

Data residing in the sense amplifier latches can be used as inputs to logic circuitry 550, 551 for various computations. These can include using parity or other metadata stored with the memory cells to detect and/or correct errors in the data retrieved from the memory cells. In one embodiment, logic circuitry 550 includes error detection circuitry 312. In one example, logic circuitry 550 is arbitrary logic that operates on data at the page level (e.g., lightweight error detection as described for **FIG. 4****).**

Logic circuitry 551 is coupled to column decoder 540. In one embodiment, logic circuitry includes error correction circuitry 310. In one example, logic circuitry 551 is arbitrary logic that operates on data at the column (e.g., code word) level (e.g., ECC engine 406).

In one embodiment, a memory device including a memory array has a plurality of memory cells 510, 511, 512, 513, etc., and one or more circuits or components to provide communication with, or perform one or more memory operations on, the memory array. A single memory array or additional memory arrays, dies, or LUNs can be used. The memory device can include row decoder 530, column decoder 540, sense amplifiers, a page buffer, a selector, an input/output (I/O) circuit, and a controller.

In some non-volatile memory devices (e.g., NAND flash), the memory cells of the memory array can be arranged in blocks. Each block can include sub-blocks. Each sub-block can include a number of physical pages, each page including a number of memory cells. In some examples, the memory cells can be arranged in a number of rows, columns, pages, sub-blocks, blocks, etc., and accessed using, for example, access lines, data lines, or one or more select gates, source lines, etc.

In volatile memory devices (e.g., DRAM) and some emerging non-volatile memory technologies, the memory cells of the memory array can be arranged in banks or other forms of partition. In one example, when an activate to a row address is issued, the row address may be addressed by addressing bits on the activate command using a bank address (to specify which bank within the memory device), and a row address (to specify which row within the specified bank). The word line associated with the row address is brought high.

A controller (e.g., controller 304) can control memory operations of the memory device according to one or more signals or instructions received on control lines (e.g., from host device 301) including, for example, one or more clock signals or control signals that indicate a desired operation (e.g., write, read, erase, etc.), or address signals (A0-AX) received on one or more address lines. One or more devices external to the memory device can control the values of the control signals on the control lines, or the address signals on the address line. Examples of devices external to the memory device can include, but are not limited to, a host, a memory controller, a processor, or one or more circuits or components.

The memory device can use access lines and data lines to transfer data to (e.g., write or erase) or from (e.g., read) one or more of the memory cells. The row decoder and the column decoder can receive and decode the address signals (A0-AX) from the address line, can determine which of the memory cells are to be accessed, and can provide signals to one or more of the access lines (e.g., one or more of a plurality of word lines (e.g., WL0-WLm)) or the data lines (e.g., one or more of a plurality of bit lines (BL0-BLn).

The memory device can include sense circuitry, such as sense amplifiers 308, configured to determine the values of data on (e.g., read), or to determine the values of data to be written to, the memory cells using the data lines. In one example, sense amplifiers are used to sense voltage (e.g., in the case of charge sharing in DRAM). In oneexample, in a selected string of memory cells, one or more of the sense amplifiers can read a logic level in the selected memory cell in response to a read current flowing in the memory array through the selected string to the data lines.

One or more devices external to the memory device can communicate with the memory device using I/O lines (e.g., DQ0-DQN), address lines (e.g., A0-AX), or control lines. I/O circuitry (e.g., 314) can transfer values of data in or out of the memory device, such as in or out of the page buffer or the memory array, using the I/O lines, according to, for example, the control lines and address lines. The page buffer can store data received from the one or more devices external to the memory device before the data is programmed into relevant portions of the memory array, or can store data read from the memory array before the data is transmitted to the one or more devices external to the memory device.

The column decoder 540 can receive and decode address signals (e.g., A0-AX) into one or more column select signals (e.g., CSEL1-CSELn). The selector (e.g., a select circuit) can receive the column select signals (CSEL1-CSELn) and select data in the page buffer representing values of data to be read from or to be programmed into memory cells. Selected data can be transferred between the page buffer and the I/O circuitry.

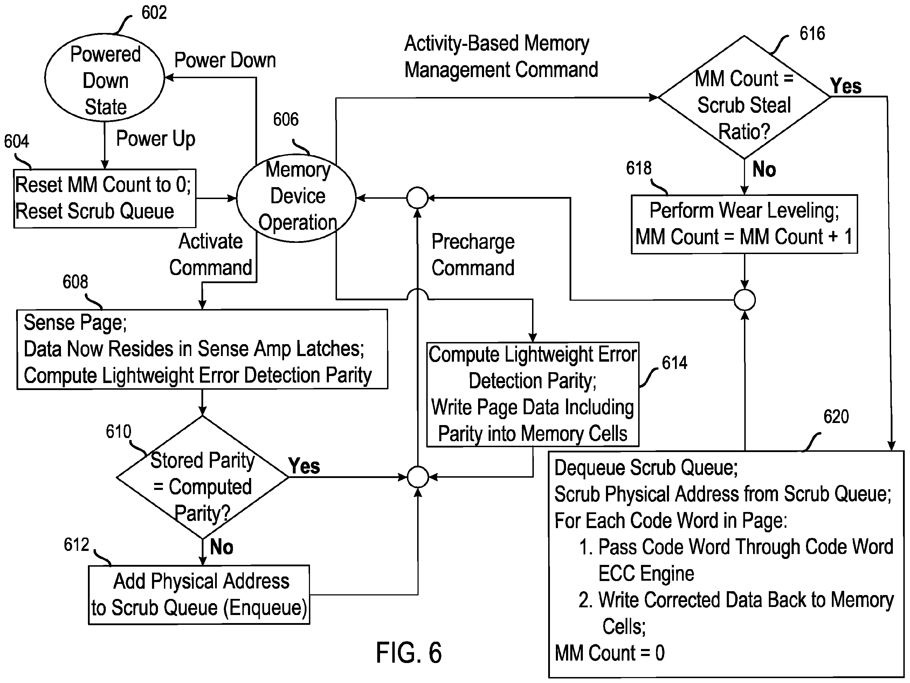

**FIG. 6** shows a flow diagram for error detection and recording of addresses associated with detected errors for future scrubbing, in accordance with some embodiments. When a memory device (e.g., memory device 302) powers up from a powered down state (transitions from block 602 to block 604), a memory management counter (e.g., counter 320) is reset to zero, and a scrub queue (e.g., scrub queue 318) is reset. The memory device then performs various operations at block 606.

In response to receiving an activate command (e.g., by controller 304 from host device 301), a page is sensed. The data from the page now resides in sense amplifier latches. This data is used to compute an error detection parity. In one example, the error detection parity is computed by error detection circuitry 312.

At block 610, the stored error detection parity from the page is compared to the computed error detection parity. In one example, the parity stored in the page is page parity 410. If the stored parity does not equal the computed parity, then at block 612 the physical address of the page is added to the scrub queue. In one example, the physical address is a row address. If the stored parity is equal to the computed parity, then normal memory device operation is continued at block 606.

In response to receiving a precharge command (e.g., by controller 304 from host device 301), at block 614 data in the sense amplifier latches is used to compute an error detection parity to be stored with data written to a page. In one example, the error detection parity that is computed is page parity 410. The page data is written to memory cells corresponding to the page, including the writing of the error detection parity. The error detection parity is computed at block 614 because there is a possibility that some data has been written to the page, which causes the code word data to change.

Another advantage of computing the lightweight error detection parity at this time is that the new lightweight error detection parity will consider any new soft errors. This ensures that a page is not added to the scrub queue multiple times for a single soft error. In such case, the first activate cycle after the soft error arises will flag an error, which will result in the page being added to the scrub queue.

It is noted that the soft error that occurred in the memory cells is sensed, and the associated data now resides in the sense amp latches. At precharge time, the computed lightweight error detection scheme will now be updated considering the soft error based upon the data that resides in the sense amp latches. If there are no further soft errors before subsequent activates, the computed lightweight error detection parity and the stored lightweight error detection parity will be equivalent. Thus, this page will not be added to the scrub queue again until a new soft error arises.

In addition, the issue of hard fails inundating address collection when the code word ECC engine is used to detect aggressors can largely be avoided by the above scheme (e.g., lightweight error detection scheme). For example, an error flag can arise when the code word ECC engine detects an error on a read codeword. Not all code words in a page are guaranteed to be read every activate cycle. It would take too much time to run each code word of the page through the code word ECC engine every activate cycle. Hard errors would inundate address collection. This is due to parity generation occurring on write data. But this can be avoided by the lightweight error detection scheme because the parity is generated based upon the data in the sense amp (SA) latches. Hard data fails are considered during parity computation such that an address with hard errors is not repeatedly added to the scrub queue. In some cases, a hard parity fail may still cause an address to falsely be identified. However, additional parity bits and logic may be added to reduce the likelihood of this occurring.

Thus, computing the lightweight error detection at precharge time in this manner updates the lightweight error detection parity based upon whatever data that exists in the sense amp latches. Therefore, the lightweight error detection parity computation at this time can accommodate new write data, new soft errors, or new hard errors.

In some embodiments, to save power the computation of lightweight error detection parity is selected (e.g., optimized) to only occur when needed. For example, the computation of lightweight error detection parity at precharge time is only performed after:
- A write has occurred to the page while the row has been activated
- A lightweight error detection parity mismatch (computed and stored parity not equal) at activate time

Memory device operation at block 606 can include various memory management operations (e.g., wear-leveling or refresh). These operations can be initiated by, for example, commands received by a controller. In one example, controller 304 receives memory management commands from host device 301. In other embodiments, controller 304 can initiate memory management operations without communication from an external device (e.g., self-managed functions).

Memory management commands and/or operations are counted by a counter (e.g., counter 320). Counter 320 can be incremented by a controller for each command or operation. The controller and/or an external device such as a host can define a threshold. In one example, the threshold is a scrub steal ratio.

In one embodiment, the scrub ratio is fuse programmed at the factory during manufacture. The process capability is characterized in the factory. Based upon the characterized process capability, a scrub ratio value is determined and fuse programmed at the factory (e.g., before being sent to a customer).

A security risk may occur if the customer (e.g., host) has the capability to adjust the scrub ratio. For example, assume the scrub ratio is 10. That means that 9/10 memory management commands would be used for wear leveling and 1/10 memory management commands would be used to scrub detected hammered rows. If the customer had the ability to adjust the scrub ratio, the customer could, for example, adjust the scrub ratio to 2. In this case only 1/2 commands would be used for wear leveling. This would indicate that less wear leveling is occurring, and there is a strong likelihood that wear is not being effectively mitigated. Therefore, the scrub ratio should be selected by the memory producer while considering process requirements. This scrub ratio is, for example, fuse programmed by the memory producer in the factory and should not be adjusted later by the customer.

At block 616, the current value of the memory management count is compared to the threshold. If the count is less than the threshold, then wear-leveling and/or another operation is performed at block 618. The count is incremented by one (or some other defined value). Then, memory device operation continues at block 606.

If the count reaches the threshold, then at block 620 one or more physical addresses are retrieved from the scrub queue. The page at each physical address is scrubbed to correct errors in the page. In one example, each code word in a page is passed through a code word ECC engine (e.g., 406). Corrected data for the code word is written back to memory cells in a memory array. The memory management count is reset to zero. Then, memory device operation continues at block 606 until the memory device is powered down to a powered down state at block 602.

At block 620, in the case when the scrub queue is empty, the controller can scrub the last physical address accessed in the memory or do nothing.

In one embodiment, instead of using a memory management count as described above to initiate scrub operations, a timer can be used to trigger scrubbing of addresses in the queue at regular or other defined time intervals. In some embodiments, a combination of memory management activity and the timer can be used to trigger the scrubbing. In one example, as an alternative to memory management commands being issued in an activity-based manner, the memory management commands are issued at a certain defined or selected time interval (e.g., periodic memory management command).

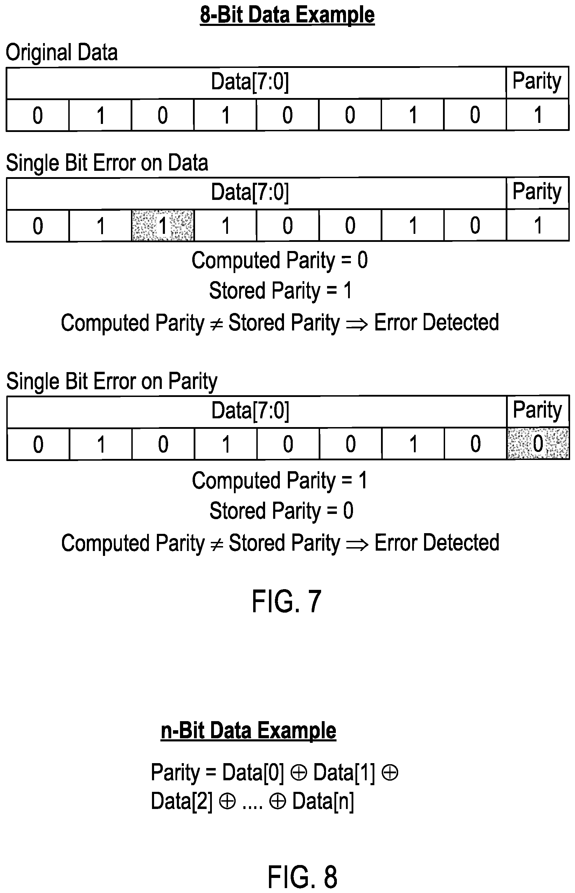

**FIG. 7** shows an example of comparing computed parity to stored parity to determine whether an error is detected. Merely for purposes of illustration, a simplified example is used in which eight bits of data are stored in a page. The stored parity for the page is 1, as shown for the original data in **FIG. 7****.** A single bit error occurs on the page after it is written. Thus, the computed parity is 0. Because the computed parity is not equal to the stored parity, a controller detects an error in the page. The location or other indication of the page is added to a scrub queue or otherwise recorded.

Also illustrated is an example in which there is a single bit error in the stored parity. In this case, the computed parity does not equal the stored parity, and the controller detects an error. The page is added to the scrub queue or otherwise recorded.

**FIG. 8** shows an exemplary approach for computing parity. Code words are stored in a page as bits Data[0] - Data[n]. A parity to be stored in the page is computed by performing an exclusive or (XOR) of all the bits of all the code words in the page, as illustrated.

In one example, memory device operation includes issuance of various commands. Non-limiting details regarding certain exemplary commands are provided below:
▪ Memory device operation
   - When activate to row address x is issued
      ▪ The row address x may be addressed by addressing bits on the activate command in the following manner
         ▪ Bank address (to specify which bank within the memory device)
         ▪ Row address (to specify which row within the specified bank)
      ▪ Word line associated with row address x brought high
      ▪ Sense page which causes data to reside in sense amp latches
      ▪ Compute lightweight error detection parity
      ▪ If stored parity disagrees with the computed parity, add physical page address to the scrub queue
   - When a read command for column *y* of activated row address *x* is issued (read command must occur while a row is activated)
      ▪ Summary: read corrected data of the data that resides in the sense amplifier (SA) latches associated with column y
      ▪ Note: read command contains the following addressing bits
         ▪ Bank address (to specify which bank within the memory device)
         ▪ Column address (to specify which column of the activated row within the specified bank)
      ▪ Full details:
         ▪ Note: Column *y* data is represented by the state of the SA latches associated with column y
            ▪ Furthermore, column *y* is associated with a code word which consists of data bits and parity bits
         ▪ Data and parity from SA latches of the appropriate column fed through Code Word ECC Engine
         ▪ Error detection
            ▪ Syndrome generated based upon computed (parity calculated from data residing in "data" SA latches) and stored parity (parity stored directly in SA latches)
         ▪ Any correctable errors are corrected
            ▪ SA latch data remains unchanged
            ▪ Data output is corrected
         ▪ Possibly corrected data sent out of memory device on DQs (IO pins) of memory device
   - When a write command for column *y* of activated row address *x* is issued (write command must occur while a row is activated)
      ▪ Summary: alter SA latches associated with column *y* to contain new write data and associated parity
      ▪ Note: write command contains the following addressing bits
         ▪ Bank address (to specify which bank within the memory device)
         ▪ Column address (to specify which column of the activated row within the specified bank)
      ▪ Full details
         ▪ Data input from DQs (IO pins) of memory device
         ▪ Data fed through Code Word ECC Engine
            ▪ Parity generated based upon input data
         ▪ Input data and generated parity (code word) written into the SA latches of the appropriate column
   - When precharge command is issued
      ▪ Summary: A precharge command will result in an implicit write to the cells and then the word line is brought low
         ▪ The cells will now contain
            ▪ The data (all the data and all the parity of all the code words) residing with the SA latches
            ▪ The computed (at precharge time) lightweight error detection parity
      ▪ Note: precharge command contains the following addressing bits
         ▪ Bank address (whatever row is activated in the bank is precharged)
      ▪ Full details:
         ▪ Compute lightweight error detection parity
            ▪ Alter SA latch or latches associated with lightweight error detection parity to reflect the state of this computation
         ▪ Write page data including computed lightweight error detection parity into memory cells
            ▪ Data residing within all SA latches written to memory cells
         ▪ Word line associated with row address x brought low after data is written into the memory cells
   - When activity-based MM command is issued
      ▪ If MM Count is equal to the Scrub Steal Ratio, scrub physical page address from scrub queue. In which case, each code word of the page is passed through the Code Word ECC Engine and corrected data written back to the physical page address. After which, the MM Count is reset to zero.
      ▪ ELSE, perform wear leveling operation and increment MM count.

A non-limiting example of a memory device is now described to illustrate technical problems associated with approaches that might solely use a code word ECC engine for hammered row detection.
- Various details regarding how the use of a code word ECC engine alone presents problems for hammered row detection are presented below:
   ∘ Various details are provided below as to the operation and behavior of the memory device:
      ▪ Memory array behavior
         - On activate commands (ACTs): Sense page of memory array which causes data to reside in sense amplifier (or simply "sense amp") latches
         - On precharge commands (PREs): Write data in sense amp latches into page of memory array
      ▪ Code Word ECC Engine behavior
         - On Writes
            ∘ Data input from DQs (IO pins) of memory device
            ∘ Data fed through Code Word ECC Engine
               ▪ Parity generated based upon input data
            ∘ Input data and generated parity (code word) written into the sense amplifier (SA) latches of the appropriate column
         - On Reads
            ∘ Data from SA latches of the appropriate column fed through Code Word ECC Engine
            ∘ Syndrome generated based upon computed and stored parity (error detection)
            ∘ Any correctable errors are corrected
               ▪ SA latch data remains unchanged
               ▪ Data output is corrected
            ∘ Possibly corrected data sent out of memory device on DQs
   ∘ Technical problems with approaches solely using Code Word ECC Engine for hammered row detection:
      ▪ Error detection only occurs with the Code Word ECC engine on reads. The specification does not require all code words of accessed pages to be read so errors could go unnoticed.
         - To resolve this issue, on activates, all code words could be cycled through Code Word ECC engine. However, the Code Word ECC engine latency is too great to run each code word through the ECC to determine if there are errors on the entire page.
      ▪ Hard fails could inundate address collection and cause correctable fails to be missed.
   ∘ At least some embodiments described herein provide a technological solution to the above technical problems by performing error detection when accessing a page:
      ▪ Error detection occurs on the entire page each activation cycle (e.g., as contrasted to error detection for only a portion of the code words stored on the page). This allows the Lightweight Error Detection Scheme aggressor detection capabilities to, for example, not be dependent upon read patterns.
         - The lightweight error detection scheme may identify an error much more quickly than running each code word through the Code Word ECC engine.
      ▪ Hard data fails would be considered during parity computation such that addresses with hard errors would not be repeatedly added to queue. However, a hard parity fail may still cause an address to falsely be identified as an aggressor.
         - The way by which the Lightweight Error Detection Scheme can add, for example, a hard error to the queue is if there is a hard error on the parity bit(s). However, it should be noted that there are fewer Lightweight Error Detection parity bits than total Lightweight Error Detection data bits. Therefore, this a low probability. Furthermore, additional parity bits and logic may be added to further reduce the likelihood of this occurring.
- The depth or size of the scrub queue is dependent upon process capabilities which dictates hammer threshold. The scrub queue depth is inversely proportional to the hammer threshold.
- If a simple even/odd parity scheme is selected for the Lightweight Error Detection scheme:
   ∘ Such an error detection scheme is capable of detecting any number of odd errors, but is not able of detecting an even number of errors.
   ∘ As a page is hammered, activity induced soft errors manifest. Thus, this scheme is capable of detecting a single bit error that appears on a page.
   ∘ This scheme typically assumes that it is more likely that a single bit error would occur than a double bit error. Or in other words, a single bit error would occur before a double bit error would occur.
   ∘ However, if it is likely that an activity-induced double bit error could occur from one activate cycle to another, then the lightweight error detection scheme can be paired with a random address sample scheme.
      ▪ This Lightweight Error Detection scheme would be unable to detect a double bit error (even number of bit errors) suddenly appearing from one activate cycle to another.
         - It should be noted that this limitation can be resolved if the Lightweight Error Detection scheme uses an error detection scheme with greater error detection capabilities than the simple even/odd parity scheme at the cost of greater die size and latency. To save die size and reduce latency, the simple even/odd parity scheme can be paired with a random address sample scheme.
      ▪ When the Lightweight Error Detection Scheme is paired with a random address sample scheme
         - Some percentage of aggressors (e.g., hammered rows) used for activity-based scrubs would be identified through the Lightweight Error Detection Scheme
         - Some percentage of aggressors used for activity-based scrubs would be identified through random address sampling
- As mentioned above, emerging memory technologies may suffer technical problems from a particularly low detection and mitigation probability due to a small hammer threshold and an increased number of pages. At least some embodiments described herein for entire page error detection provide a solution that increases the probability of detecting hammered pages despite an increased number of pages and a low hammer threshold.
   ∘ It is noted that some approaches attempt to address this problem by using a Per Row Activation Counter (PRAC).
      ▪ For PRAC, additional bits are added to each page to serve as row activation counter
         - These bits are incremented each activation cycle
      ▪ The number of PRAC counter bits is proportional to log₂(*hammer threshold*)
   ∘ At least some embodiments of the entire page error detection for hammer detection as described herein provide a solution to this problem with less die area increase than use of PRAC. Less bits need to be added per row. At a minimum, only one additional bit needs to be added per page for entire page error detection for hammer detection.

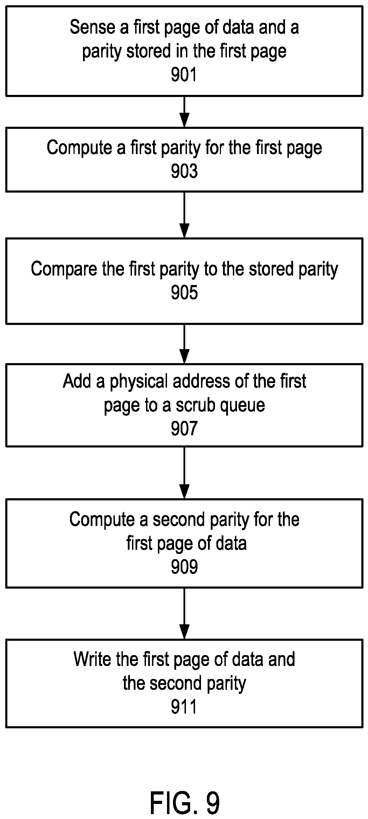

**FIG. 9** shows a method for detecting errors in accessed pages and recording the errors for later correction (e.g., scrub queue 318), in accordance with some embodiments. For example, the method of **FIG. 9** can be implemented in the memory device 302 of **FIG. 3****.** In one example, the errors are detected in the pages using error detection circuitry 312. In one example, the errors are later corrected using error correction circuitry 310.

The method of **FIG. 9** can be performed by processing logic that can include hardware (e.g., processing device, circuitry, dedicated logic, programmable logic, microcode, hardware of a device, integrated circuit, etc.), software (e.g., instructions run or executed on a processing device), or a combination thereof. In some embodiments, the method of **FIG. 9** is performed at least in part by one or more processing devices (e.g., controller 304 of **FIG. 3****)** and/or by logic circuitry.

Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

At block 901, a first page of data and a parity stored in the first page are sensed. In one example, the stored code words and page parity 410 of page 402 are sensed in response to an activate command.

At block 903, a first parity is computed for the first page. In one example, the first parity is computed by error detection circuitry 408.

At block 905, the computed first parity is compared to the stored parity. In one example, controller 304 compares the computed first parity to page parity 410.

At block 907, if an error is detected, a physical address of the first page is added to a scrub queue. In one example, the physical address of page 402 is added to scrub queue 318.

At block 909, a second parity for the first page of data is computed when new data is being written to the first page (e.g., in response to a precharge command). In one example, a lightweight error detection parity is computed at block 614.

At block 911, the first page of data and the computed second parity are written to the first page. For example, the second parity can then be used for error detection when a future activate command is issued after the first page is written. In one example, the first page of data including the computed second parity are written into memory cells of memory array 306.

In some aspects, the techniques described herein relate to an apparatus including: error detection circuitry (e.g., 312); and at least one controller (e.g., 304) configured to: access portions of a memory array (e.g., 306); detect, using the error detection circuitry, whether an error exists in data stored in each accessed portion; and in response to detecting a first error for a first portion, record a first location of the first portion.

In some aspects, the techniques described herein relate to an apparatus, further including error correction circuitry (e.g., 310), wherein the controller is further configured to correct the detected first error using the error correction circuitry.

In some aspects, the techniques described herein relate to an apparatus, wherein a number of bit errors that can be corrected by the error correction circuitry is greater than or equal to a number of bit errors that can be detected by the error detection circuitry.

In some aspects, the techniques described herein relate to an apparatus, wherein: the controller is further configured to perform memory management for a memory device that includes the memory array; and the memory management includes correcting the first error using the error correction circuitry.

In some aspects, the techniques described herein relate to an apparatus, further including a queue (e.g., scrub queue 318) to store locations of the memory array for which errors in stored data are detected, wherein the queue includes the first location, and wherein the controller is further configured to correct errors at the stored locations during a scrub operation.

In some aspects, the techniques described herein relate to an apparatus, wherein the error detection circuitry is configured to determine a parity for the data stored in each accessed portion.

In some aspects, the techniques described herein relate to an apparatus, wherein the first portion is a row of the memory array, the row stores a first parity (e.g., page parity 410) of data written to the row, and the first parity is compared to a second parity determined by the error detection circuitry when data is read from the row.

In some aspects, the techniques described herein relate to an apparatus, wherein accessing portions of the memory array includes activating rows of the memory array to read or write data stored on each activated row.

In some aspects, the techniques described herein relate to an apparatus, wherein the accessed portions are pages storing code words (e.g., the pages include page 402), and each page stores a parity determined using the code words stored in the page.

In some aspects, the techniques described herein relate to an apparatus, wherein the first error is detected by comparing a parity stored with code words in a first page to a parity computed for the code words when the first page is activated.

In some aspects, the techniques described herein relate to an apparatus including: a counter (e.g., 320); and at least one controller configured to: maintain, when activating rows of a memory array, a record of the rows for which errors are detected in stored data; count, using the counter, a number (e.g., MM count of **FIG. 6****)** of memory management operations for the memory array; and correct, based on the number, the detected errors for the recorded rows.

In some aspects, the techniques described herein relate to an apparatus, wherein the detected errors are corrected when the number reaches a threshold.

In some aspects, the techniques described herein relate to an apparatus, wherein the errors are detected in the stored data in response to an activate command.

In some aspects, the techniques described herein relate to an apparatus, wherein the detected errors are corrected when the number reaches a scrub threshold, and the controller is further configured to randomize the scrub threshold.

In one example, a random scrub threshold is determined (within a certain range) when the MM Count is reset. For example:
MM Count reset to 0;
Scrub threshold set to a first random value within some range;
Each memory management command increments the MM Count (during this time memory management commands are used for wear leveling);
Once the first random value is reached, the scrub may occur and the MM Count is reset;
Scrub threshold set to a second random value within some range;
Each memory management command increments the MM Count (during this time memory management commands are used for wear leveling);
Once the second random value is reached, the scrub may occur and the MM Count is reset;

In some aspects, the techniques described herein relate to an apparatus, wherein: the controller is further configured to operate in a first mode in which a wear-leveling operation is performed and the counter incremented (e.g., block 618), and a second mode in which at least one of the detected errors is corrected and the counter is reset (e.g., block 620); and the first or second mode is selected based on the number.

In some aspects, the techniques described herein relate to an apparatus, wherein correcting the detected errors includes passing code words stored in memory cells through an ECC engine (e.g., code word ECC engine 406) and writing corrected data back to the memory cells.

In some aspects, the techniques described herein relate to an apparatus, wherein the record is a queue including a physical address of each row for which an error is detected.

In some aspects, the techniques described herein relate to a method including: in response to receiving an activate command, sensing a first page of data and a parity stored in the first page (e.g., block 608); computing a first parity for the first page; and comparing the first parity to the stored parity.

In some aspects, the techniques described herein relate to a method, further including in response to determining that the first parity does not match the stored parity, adding a physical address of the first page to a scrub queue.

In some aspects, the techniques described herein relate to a method, further including in response to receiving a precharge command: computing a second parity for the first page of data; and writing the first page of data and the second parity (e.g., block 614).

The disclosure includes various devices which perform the methods and implement the systems described above, including data processing systems which perform these methods, and computer-readable media containing instructions which when executed on data processing systems cause the systems to perform these methods.

The description and drawings are illustrative and are not to be construed as limiting. Numerous specific details are described to provide a thorough understanding. However, in certain instances, well-known or conventional details are not described in order to avoid obscuring the description. References to one or an embodiment in the present disclosure are not necessarily references to the same embodiment; and, such references mean at least one.

As used herein, "coupled to" or "coupled with" generally refers to a connection between components, which can be an indirect communicative connection or direct communicative connection (e.g., without intervening components), whether wired or wireless, including connections such as electrical, optical, magnetic, etc.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

In this description, various functions and/or operations may be described as being performed by or caused by software code to simplify description. However, those skilled in the art will recognize what is meant by such expressions is that the functions and/or operations result from execution of the code by one or more processing devices, such as a microprocessor, Application-Specific Integrated Circuit (ASIC), graphics processor, and/or a Field-Programmable Gate Array (FPGA). Alternatively, or in combination, the functions and operations can be implemented using special purpose circuitry (e.g., logic circuitry), with or without software instructions. Embodiments can be implemented using hardwired circuitry without software instructions, or in combination with software instructions. Thus, the techniques are not limited to any specific combination of hardware circuitry and software, nor to any particular source for the instructions executed by a computing device.

While some embodiments can be implemented in fully functioning computers and computer systems, various embodiments are capable of being distributed as a computing product in a variety of forms and are capable of being applied regardless of the particular type of computer-readable medium used to actually effect the distribution.

At least some aspects disclosed can be embodied, at least in part, in software. That is, the techniques may be carried out in a computing device or other system in response to its processing device, such as a microprocessor, executing sequences of instructions contained in a memory, such as ROM, volatile RAM, non-volatile memory, cache or a remote storage device.

Routines executed to implement the embodiments may be implemented as part of an operating system, middleware, service delivery platform, SDK (Software Development Kit) component, web services, or other specific application, component, program, object, module or sequence of instructions (sometimes referred to as computer programs). Invocation interfaces to these routines can be exposed to a software development community as an API (Application Programming Interface). The computer programs typically comprise one or more instructions set at various times in various memory and storage devices in a computer, and that, when read and executed by one or more processors in a computer, cause the computer to perform operations necessary to execute elements involving the various aspects.

A computer-readable medium can be used to store software and data which when executed by a computing device causes the device to perform various methods. The executable software and data may be stored in various places including, for example, ROM, volatile RAM, non-volatile memory and/or cache. Portions of this software and/or data may be stored in any one of these storage devices. Further, the data and instructions can be obtained from centralized servers or peer to peer networks. Different portions of the data and instructions can be obtained from different centralized servers and/or peer to peer networks at different times and in different communication sessions or in a same communication session. The data and instructions can be obtained in entirety prior to the execution of the applications. Alternatively, portions of the data and instructions can be obtained dynamically, just in time, when needed for execution. Thus, it is not required that the data and instructions be on a computer-readable medium in entirety at a particular instance of time.

Examples of computer-readable media include, but are not limited to, recordable and non-recordable type media such as volatile and non-volatile memory devices, read only memory (ROM), random access memory (RAM), flash memory devices, solid-state drive storage media, removable disks, magnetic disk storage media, optical storage media (e.g., Compact Disk Read-Only Memory (CD ROMs), Digital Versatile Disks (DVDs), etc.), among others. The computer-readable media may store the instructions. Other examples of computer-readable media include, but are not limited to, non-volatile embedded devices using NOR flash or NAND flash architectures. Media used in these architectures may include un-managed NAND devices and/or managed NAND devices, including, for example, eMMC, SD, CF, UFS, and SSD.

In general, a non-transitory computer-readable medium includes any mechanism that provides (e.g., stores) information in a form accessible by a computing device (e.g., a computer, mobile device, network device, personal digital assistant, manufacturing tool having a controller, any device with a set of one or more processors, etc.). A "computer-readable medium" as used herein may include a single medium or multiple media (e.g., that store one or more sets of instructions).

In various embodiments, hardwired circuitry may be used in combination with software and firmware instructions to implement the techniques. Thus, the techniques are neither limited to any specific combination of hardware circuitry and software nor to any particular source for the instructions executed by a computing device.

Various embodiments set forth herein can be implemented using a wide variety of different types of computing devices. As used herein, examples of a "computing device" include, but are not limited to, a server, a centralized computing platform, a system of multiple computing processors and/or components, a mobile device, a user terminal, a vehicle, a personal communications device, a wearable digital device, an electronic kiosk, a general purpose computer, an electronic document reader, a tablet, a laptop computer, a smartphone, a digital camera, a residential domestic appliance, a television, or a digital music player. Additional examples of computing devices include devices that are part of what is called "the internet of things" (IOT). Such "things" may have occasional interactions with their owners or administrators, who may monitor the things or modify settings on these things. In some cases, such owners or administrators play the role of users with respect to the "thing" devices. In some examples, the primary mobile device (e.g., an Apple iPhone) of a user may be an administrator server with respect to a paired "thing" device that is worn by the user (e.g., an Apple watch).

In some embodiments, the computing device can be a computer or host system, which is implemented, for example, as a desktop computer, laptop computer, network server, mobile device, or other computing device that includes a memory and a processing device. The host system can include or be coupled to a memory sub-system so that the host system can read data from or write data to the memory sub-system. The host system can be coupled to the memory sub-system via a physical host interface. In general, the host system can access multiple memory sub-systems via a same communication connection, multiple separate communication connections, and/or a combination of communication connections.

In some embodiments, the computing device is a system including one or more processing devices. Examples of the processing device can include a microcontroller, a central processing unit (CPU), special purpose logic circuitry (e.g., a field programmable gate array (FPGA), an application specific integrated circuit (ASIC), etc.), a system on a chip (SoC), or another suitable processor.

In one example, a computing device is a controller of a memory system. The controller includes a processing device and memory containing instructions executed by the processing device to control various operations of the memory system.

Although some of the drawings illustrate a number of operations in a particular order, operations which are not order dependent may be reordered and other operations may be combined or broken out. While some reordering or other groupings are specifically mentioned, others will be apparent to those of ordinary skill in the art and so do not present an exhaustive list of alternatives. Moreover, it should be recognized that the stages could be implemented in hardware, firmware, software or any combination thereof.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In the foregoing specification, the disclosure has been described with reference to specific exemplary embodiments thereof. It will be evident that various modifications may be made thereto without departing from the broader spirit and scope as set forth in the following claims. The specification and drawings are, accordingly, to be regarded in an illustrative sense rather than a restrictive sense.

## Claims

1. An apparatus comprising:
error detection circuitry; and
at least one controller configured to:
access portions of a memory array;
detect, using the error detection circuitry, whether an error exists in data stored in each accessed portion; and
in response to detecting a first error for a first portion, record a first location of the first portion.

2. The apparatus of claim 1, further comprising error correction circuitry, wherein the controller is further configured to correct the detected first error using the error correction circuitry, wherein:
a number of bit errors that can be corrected by the error correction circuitry is greater than or equal to a number of bit errors that can be detected by the error detection circuitry;
the controller is further configured to perform memory management for a memory device that includes the memory array; and
the memory management includes correcting the first error using the error correction circuitry.

3. The apparatus of claim 1, further comprising a queue to store locations of the memory array for which errors in stored data are detected, wherein the queue includes the first location, and wherein the controller is further configured to correct errors at the stored locations during a scrub operation.

4. The apparatus of claim 1, wherein the error detection circuitry is configured to determine a parity for the data stored in each accessed portion.

5. The apparatus of claim 1, wherein the first portion is a row of the memory array, the row stores a first parity of data written to the row, and the first parity is compared to a second parity determined by the error detection circuitry when data is read from the row.

6. The apparatus of claim 1, wherein accessing portions of the memory array comprises activating rows of the memory array to read or write data stored on each activated row, and wherein the accessed portions are pages storing code words, and each page stores a parity determined using the code words stored in the page.

7. The apparatus of claim 1, wherein the first error is detected by comparing a parity stored with code words in a first page to a parity computed for the code words when the first page is activated.

8. The apparatus of claim 1, further comprising:
a counter;
wherein the controller is further configured to:
maintain, when activating rows of a memory array, a record of the rows for which errors are detected in stored data;
count, using the counter, a number of memory management operations for the memory array; and
correct, based on the number, the detected errors for the recorded rows.

9. The apparatus of claim 8, wherein the detected errors are corrected when the number reaches a threshold, and the errors are detected in the stored data in response to an activate command.

10. The apparatus of claim 8, wherein the detected errors are corrected when the number reaches a scrub threshold, and the controller is further configured to randomize the scrub threshold.

11. The apparatus of claim 8, wherein:
the controller is further configured to operate in a first mode in which a wear-leveling operation is performed and the counter incremented, and a second mode in which at least one of the detected errors is corrected and the counter is reset; and
the first or second mode is selected based on the number.

12. The apparatus of claim 8, wherein correcting the detected errors comprises passing code words stored in memory cells through an ECC engine, and writing corrected data back to the memory cells, and wherein the record is a queue including a physical address of each row for which an error is detected.

13. A method comprising:
in response to receiving an activate command, sensing a first page of data and a parity stored in the first page;
computing a first parity for the first page; and
comparing the first parity to the stored parity.

14. The method of claim 13, further comprising in response to determining that the first parity does not match the stored parity, adding a physical address of the first page to a scrub queue.

15. The method of claim 13, further comprising in response to receiving a precharge command:
computing a second parity for the first page of data; and
writing the first page of data and the second parity.
